# EUROPÄISCHE PATENTANMELDUNG

(11) **EP 1 818 961 A1**
(43) Veröffentlichungstag der Anmeldung: **15.08.2007**
(21) Anmeldenummer: 07001129.1
(22) Anmeldetag: 19.01.2007
(51) Int. Cl.: H01H 13/702, B60R 16/02

(54) **Fahrzeugeinrichtung mit einem Bedienelement**

(30) Priorität: 06.02.2006 US 348418
(71) Anmelder: Volkswagen Aktiengesellschaft, 38436 Wolfsburg (DE)
(72) Erfinder: Rose, Kai Christen, Dr., 12159 Berlin (DE); Stoschek, Arne, Dr., 94303 Palo Alto California (US)

(57) **Zusammenfassung**

Die Erfindung betrifft ein im wesentlichen flächenhaftes Bedienelement (20; 50) zum Bedienen einer Fahrzeugkomponente (4; 7), insbesondere zum Bedienen eines Fensters (7) oder eines Schiebedachs (4). Das Bedienelement (20; 50) hat berührungsempfindliche Bereiche (21, 22, 23; 51; 53, 54) und erzeugt Steuersignale zum Bewegen der Fahrzeugkomponente (4; 7) in eine jeweilige Endposition, wenn ein erster bzw. dritter berührungsempfindlicher Bereich (21, 23; 51; 54) des Bedienelements (20;, 50) berührt wird. Ein zweiter berührungsempfindlicher Bereich (22; 53) des Bedienelements (29; 50) hat Unterbereiche (24), um eine variable Einstellung der Fahrzeugkomponente in Zwischenpositionen zwischen den Endpositionen zu ermöglichen.

## Beschreibung

Die Erfindung betrifft eine Fahrzeugeinrichtung mit einer zwischen einer ersten und einer zweiten Position bewegbaren Fahrzeugkomponente und einem Bedienelement zum Bedienen der Fahrzeugkomponente.

Herkömmliche Fenster mit elektrischen Fensterhebern für Kraftfahrzeuge benützen im allgemeinen Kippschalter zum Steuern des Öffnungs- und Schließvorgangs der Fenster. Diese Kippschalter haben typischerweise zwei Schalterstellungen, wobei eine der Schalterstellungen es dem Bediener ermöglicht das Fenster zu öffnen, d.h. herunterzufahren, und die andere Schalterstellung es dem Bediener ermöglicht das Fenster zu schließen, d.h. hochzufahren. Wenn der Bediener das Fenster nur zum Teil öffnen will, dann kann der Benutzer die Position der Fensterscheibe durch längeres Drücken oder Ziehen des Kippschalters einstellen, wobei die Zeitdauer des Drückens bzw. Ziehens des Kippschalters die Position der Fensterscheibe bestimmt.

Ein Nachteil bei der Benutzung eines Kippschalters in der oben beschriebenen Art ist, dass eine genaue Einstellung der Position des Fensters schwierig ist, da sie vom Bediener eine präzise, zeitlich genau festgelegte Betätigung des Kippschalters erfordert. Wenn der Bediener den Kippschalter zu lange oder zu kurz betätigt, dann wird das Fenster zu weit oder nicht weit genug bewegt. In diesem Fall muss der Bediener die Position des Fensters durch nochmaliges Betätigen des Kippschalters einstellen. Es kann sogar vorkommen, dass der Bediener den Kippschalter mehrmals betätigen muss und das Fenster wiederholt auf und ab bewegen muss bis das Fenster in der gewünschten Position ist. Eine derartige Bedienung ist insbesondere dann nachteilig, wenn der Bediener fährt und sich nicht auf das Heben und Senken des Fensters sondern auf den Verkehr konzentrieren sollte.

Um das Heben und Senken von Fenstern eines Kraftfahrzeugs mit elektrischen Fensterhebern auf eine gewünschte Position einfacher zu machen, wird in der DE 198 48 941 C2 eine Steuerung für Fenster mit elektrischen Fensterhebern eines Kraftfahrzeugs vorgeschlagen, die einen Drehschalter zum Einstellen der Position des Fensters verwendet. Der Drehschalter hat bei bestimmten Drehwinkeln Raststellungen und hat eine Nullstellung, in die der Drehschalter nach der Betätigung zurückfedert. Jeder Drehwinkel einer jeweiligen Raststellung des Drehschalters entspricht einem gegebenen Verschiebeweg für das Fenster. Die Beziehung zwischen den Drehwinkeln und den Verschiebewegen ist derart, dass der Verschiebeweg des Fensters nichtlinear mit dem Drehwinkel des Drehschalter zunimmt. Dies ermöglicht eine einfache Einstellung der Fensterposition.

Ein Nachteil des Drehschalters sowie des Kippschalters ist, dass diese eine robuste Bauweise aufweisen müssen und in einer mechanisch stabilen Position eingebaut werden müssen, da Schalter für Fenster mit elektrischen Fensterhebern eine häufige Benutzung während der Lebensdauer eines Fahrzeugs aushalten müssen. Diese Anforderungen bezüglich der mechanischen Stabilität führen zu Einschränkungen in Bezug auf die Einbaupositionen, Schaltergeometrien und Herstellungstechnologien. Ein weiterer Nachteil der oben beschriebenen Schalter ist, dass es kostspielig ist die Schalter ästhetisch ansprechend zu gestalten, da ihre Farbe, Oberflächenbeschaffenheit, Stil usw. an das Material in der Umgebung der Einbauposition des Schalters und an die Farbe und den Stil der anderen Schalter im Fahrzeug angepasst werden muss. Ein weiterer Nachteil der oben beschriebenen Schalter ist, dass sie etliche mechanische und elektrische Bestandteile enthalten, die nicht nur die Komplexität und Kosten erhöhen, sondern auch eine Erhöhung des Gesamtgewichts des Fahrzeugs bedeuten, da mehrere dieser Schalter in einem Fahrzeug verwendet werden.

In der US 5,085,106 wird eine elektrische Schaltvorrichtung nach dem Oberbegriff des Anspruches 1 für ein Fahrzeuggetriebe offenbart, wobei mehrere Druckknopfmembranschalter verschiedenen Schaltpositionen des Getriebes entsprechen.

Aufgabe der Erfindung ist demnach eine Fahrzeugeinrichtung mit einer zwischen einer ersten und einer zweiten Position bewegbaren Fahrzeugkomponente und einem Bedienelement zum Bedienen der Fahrzeugkomponente zur Verfügung zu stellen, bei der die oben erwähnten Nachteile der bekannten Bedienelemente nicht auftreten. Insbesondere sollte eine intuitive Bedienbarkeit gewährleistet werden, die es dem Bediener einfach macht die Fahrzeugkomponente präzise zu bedienen. Eine weitere Aufgabe ist es ein Bedienelement zur Verfügung zu stellen, das kostengünstig herzustellen ist und ästhetisch ansprechend aussieht.

Die vorgenannte Aufgabe wird gelöst durch eine Fahrzeugeinrichtung mit einer zwischen einer ersten und einer zweiten Position bewegbaren Fahrzeugkomponente und einem Bedienelement zum Bedienen der Fahrzeugkomponente, wobei das Bedienelement einen im wesentlichen flächenhaften, berührungsempfindlichen ersten Bereich, einen im wesentlichen flächenhaften, berührungsempfindlichen zweiten Bereich und einen im wesentlichen flächenhaften, berührungsempfindlichen dritten Bereich aufweist, wobei das Bedienelement in Antwort auf eine Berührung des ersten Bereichs ein Steuersignal zum Bewegen der Fahrzeugkomponente in die erste Position erzeugt, wobei der zweite Bereich des Bedienelements Unterbereiche aufweist zur variablen Einstellung der Fahrzeugkomponente in Zwischenpositionen zwischen der ersten Position und der zweiten Position, wobei das Bedienelement in Antwort auf eine Berührung eines der Unterbereiche des zweiten Bereichs ein Steuersignal zum Bewegen der Fahrzeugkomponente in eine entsprechende Zwischenposition zwischen der ersten Position und der zweiten Position erzeugt, wobei die Unterbereiche des zweiten Bereichs des Bedienelements relativ zueinander so angeordnet sind, dass benachbarte Unterbereiche des zweiten Bereichs, bei Berührung die Fahrzeugkomponente dazu veranlassen sich in entsprechende benachbarte Zwischenpositionen zwischen der ersten Position und der zweiten Position zu bewegen und wobei das Bedienelement in Antwort auf eine Berührung des dritten Bereichs ein Steuersignal zum Bewegen der Fahrzeugkomponente in die zweite Position erzeugt.

Ein Vorteil des oben beschriebenen Bedienelements ist, dass aufgrund seiner flächenhaften Form die berührungsempfindlichen Bereiche intuitiv als eine Darstellung entsprechender Positionen einer Fahrzeugkomponente, wie zum Beispiel eines Seitenfensters oder eines Schiebedachs, erkannt werden. Außerdem ist es möglich die Position der Fahrzeugkomponente mit einer einzigen Berührung präzise einzustellen, da der berührungsempfindliche Bereich, der die Zwischenpositionen der Fahrzeugkomponente steuert Unterbereiche aufweist. Beispielsweise kann ein Bediener das Seitenfenster mit einer einzigen Berührung genau zu einer gewünschten Position anheben oder absenken. Außerdem kann der Bediener mit dem Finger über den berührungsempfindlichen Bereich streichen, um die Fahrzeugkomponente präzise zu steuern. Ein weiterer Vorteil des flächenhaften Bedienelements ist, dass es im Gegensatz zu herkömmlichen Schaltern keine mechanisch stabile Einbauposition benötigt und deshalb an fast jeder beliebigen Oberfläche befestigt werden kann.

Nach einem weiteren Merkmal der vorliegenden Erfindung hat die Fahrzeugkomponente einen Randbereich, wobei der erste, zweite und dritte Bereich des Bedienelements benachbart zur Fahrzeügkomponente angeordnet sind und sich entlang des Randbereichs der Fahrzeugkomponente erstrecken, wenn die Fahrzeugkomponente in der ersten Position ist. Die Platzierung des Bedienelements gleich neben der zu steuernden Fahrzeugkomponente verbessert in vorteilhafter Weise die intuitive Bedienung des Bedienelements.

Nach einem weiteren Merkmal der vorliegenden Erfindung ist die Fahrzeugkomponente eine Fensterscheibe, die zum Öffnen und Schließen einer Fensteröffnung zwischen der ersten Position, entsprechend einer geschlossenen Position, und der zweiten Position, entsprechend einer offenen Position, bewegbar ist, wobei sich der erste Bereich des Bedienelements entlang wenigstens eines Teils einer oberen Kante der Fensteröffnung erstreckt, wobei sich der zweite Bereich des Bedienelements im wesentlichen ganz entlang einer seitlichen Kante der Fensteröffnung erstreckt, und wobei der dritte Bereich benachbart zu einer unteren Kante der Fensteröffnung angeordnet ist.

Nach einem weiteren Merkmal der vorliegenden Erfindung hält ein Fensterrahmen die Fensterscheibe und definiert die Fensteröffnung, wobei wenigstens der erste und der zweite Bereich des Bedienelements auf dem Fensterrahmen angeordnet sind.

Nach einem weiteren Merkmal der vorliegenden Erfindung bilden der erste, zweite und dritte Bereich ein im wesentlichen flächenhaftes, durchgehendes Band, das ganz um die Festeröffnung herumläuft. Dies erleichtert es das Bedienelement mit der Hand zu erreichen. Wenn das Bedienelement beispielsweise ein vorderes Seitenfenster umrandet, dann kann sogar ein hinten im Fahrzeug sitzender Passagier das Bedienelement mit der Hand erreichen und das vordere Seitenfenster öffnen oder schließen.

Nach einem weiteren Merkmal der vorliegenden Erfindung ist der erste Bereich des Bedienelements oberhalb der Fensteröffnung auf der Innenseite eines Fahrzeugdachbereichs angeordnet, der an die Fensteröffnung angrenzt.

Nach einem weiteren Merkmal der vorliegenden Erfindung ist der zweite Bereich des Bedienelements auf einer A-Säule eines Fahrzeugs angeordnet, die neben der Fensteröffnung angeordnet ist.

Nach einem weiteren Merkmal der vorliegenden Erfindung ist der dritte Bereich des Bedienelements im unteren Bereich einer A-Säule eines Fahrzeugs angeordnet, wobei die A-Säule neben der Fensteröffnung angeordnet ist. Die oben beschriebenen Ausführungsformen sind beispielsweise dann vorteilhaft, wenn das Fahrzeugdach und die A-Säule für den Fahrer leicht mit der Hand erreichbar sind.

Nach einem weiteren Merkmal der vorliegenden Erfindung ist jeweils ein Piktogramm in dem ersten, zweiten und dritten Bereich des Bedienelements angeordnet, wobei das Piktogramm die jeweilige Bedienfunktion des ersten, zweiten und dritten Bereichs des Bedienelements anzeigt. Dadurch wird die intuitive Bedienung des Bedienelements verbessert.

Nach einem weiteren Merkmal der vorliegenden Erfindung ist die Fahrzeugkomponente ein verschiebbares Dachelement, das eine Dachöffnung in einen Fahrzeugdach öffnet und schließt, indem es sich zwischen der ersten Position, die einer geschlossenen Stellung entspricht, und der zweiten Position, die einer offenen Stellung entspricht, hin und her bewegt, wobei der zweite Bereich des Bedienelements zwischen dem ersten Bereich und dem dritten Bereich des Bedienelements angeordnet ist. Dadurch, dass der erste, zweite und dritte Bereich zueinander in der oben beschriebenen Lagebeziehung stehen, entsprechend einem geschlossenen, einem teilweise geöffneten und einem ganz geöffneten Dach, ist es für den Bediener einfach zu erkennen, dass der erste, zweite und dritte Bereich des flächenhaften Bedienelements jeweils den verschiedenen Stellungen des Dachelements entspricht.

Nach einem weiteren Merkmal der vorliegenden Erfindung weist das Bedienelement einen weiteren, zwischen dem ersten Bereich und dem zweiten Bereich des Bedienelements angeordneten Bereich auf, wobei der weitere Bereich in Antwort auf eine Berührung ein Steuersignal erzeugt, um das verschiebbare Dachelement in eine gekippte Stellung zu bringen.

Nach einem weiteren Merkmal der vorliegenden Erfindung weist das verschiebbare Dachelement eine einstellbare Lichtdurchlässigkeit auf, das Bedienelement weist einen weiteren Bereich auf zum variablen Einstellen der Lichtdurchlässigkeit des verschiebbaren Dachelements, wobei der weitere Bereich Unterbereiche aufweist und das Bedienelement ein Steuersignal erzeugt zum variablen Einstellen der Lichtdurchlässigkeit des verschiebbaren Dachelements in Antwort auf eine Berührung eines jeweiligen Unterbereichs des weiteren Bereichs des Bedienelements und wobei die Unterbereiche des weiteren Bereichs des Bedienelements zueinander so angeordnet sind, dass sich die Lichtdurchlässigkeit des verschiebbaren Dachelements um jeweils einen minimalen Wert ändert, wenn jeweils nebeneinanderliegende Unterbereiche nacheinander berührt werden.

Nach einem weiteren Merkmal der vorliegenden Erfindung weist das Bedienelement weitere Bereiche aufweist zum Einstellen der Lichtdurchlässigkeit des verschiebbaren Dachelements, wobei ein erster der weiteren Bereiche des Bedienelements neben dem ersten Bereich des Bedienelements angeordnet ist und das Bedienelement ein Steuersignal erzeugt zum Einstellen der Lichtdurchlässigkeit des verschiebbaren Dachelements auf eine minimale Lichtdurchlässigkeit in Antwort auf eine Berührung des ersten der weiteren Bereiche, wobei ein zweiter der weiteren Bereiche des Bedienelements neben dem zweiten Bereich des Bedienelements angeordnet ist und das Bedienelement ein Steuersignal erzeugt zum variablen Einstellen der Lichtdurchlässigkeit des verschiebbaren Dachelements auf einen Zwischenzustand für die Lichtdurchlässigkeit in Antwort auf eine Berührung des zweiten der weiteren Bereiche, wobei der Zwischenzustand für die Lichtdurchlässigkeit abhängig ist von der Stelle, an der der zweite der weiteren Bereiche berührt wird, und wobei ein dritter der weiteren Bereiche des Bedienelements neben dem dritten Bereich des Bedienelements angeordnet ist und das Bedienelement ein Steuersignal erzeugt zum Einstellen der Lichtdurchlässigkeit des verschiebbaren Dachelements auf eine maximale Lichtdurchlässigkeit in Antwort auf eine Berührung des dritten der weiteren Bereiche. Die Positionierung der verschiedenen Bereiche des Bedienelements in der oben beschriebenen Weise ermöglicht eine logische Steuerung von zwei unterschiedlichen Funktionen des Dachelements.

Nach einem weiteren Merkmal der vorliegenden Erfindung weist das Bedienelement ein flexibles Gewebe auf, das plan auf einer gekrümmten Oberfläche aufliegt, d.h. das flexible Gewebe schmiegt sich an die gekrümmte Oberfläche an, wobei die im wesentlichen flächenhaften, berührungsempfindlichen ersten, zweiten und dritten Bereiche des Bedienelements durch das flexible Gewebe gebildet werden. Durch die Verwendung eines flexiblen Gewebes ist es möglich das Bedienelement in einer ästhetisch ansprechenden Weise auf praktische jeder Oberfläche im Innenraum des Fahrzeugs anzubringen.

Der Aufbau und die Funktion der Fahrzeugeinrichtung gemäß der Erfindung sowie weitere Aufgaben und Vorteile der Erfindung ergeben sich aus der nachfolgenden Beschreibung einzelner Ausführungsformen in Kombination mit den Zeichnungen.
Fig. 1 zeigt schematisch in perspektivischer Ansicht ein Kraftfahrzeug mit einem Schiebedach und einem Fenster, das von einem Bedienelement gemäß der Erfindung gesteuert werden kann,
Fig. 2 zeigt eine schematische Seitenansicht einer Fahrzeugseitenfensteranordnung gemäß der Erfindung vom Innenraum des Kraftfahrzeugs aus gesehen,
Fig. 3 zeigt eine schematische Seitenansicht einer weiteren Ausführungsform einer Seitenfensteranordnung gemäß der Erfindung,
Fig. 4 zeigt eine schematische Seitenansicht einer zusätzlichen Ausführungsform einer Seitenfensteranordnung gemäß der Erfindung,
Fig. 5 zeigt eine schematische Draufsicht eines Bedienelements gemäß der Erfindung zum Bedienen eines Dachelements eines Fahrzeugs,
Fig. 6 zeigt eine schematische Draufsicht eines Bedienelements gemäß der Erfindung zum Bedienen von zwei Funktionen eines Dachelements und
Fig. 7 bis Fig. 9 zeigen schematische Draufsichten weiterer Ausführungsformen von Bedienelementen gemäß der Erfindung zum Bedienen eines Dachelements.

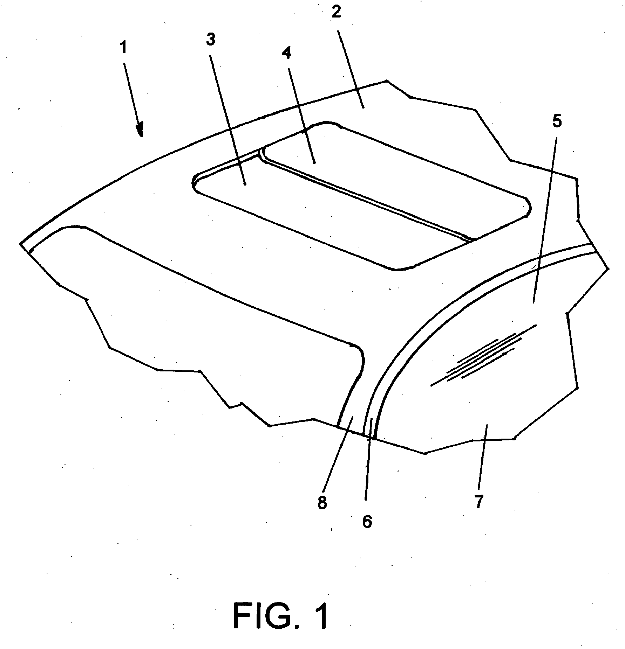

Im Detail zeigt Fig. 1 schematisch in perspektivischer Teilansicht ein Kraftfahrzeugs 1 mit einem Dach 2 das eine Dachöffnung 3 aufweist. Ein Schiebedachelement 4 öffnet und schließt die Dachöffnung 3. Das Dachelement 4 ist vorwärts und rückwärts verschiebbar und kann in eine gekippte Stellung gebracht werden. Das Kraftfahrzeug 1 hat außerdem ein Seitenfenster 5 mit einem Fensterrahmen 6 und einer Fensterscheibe 7. Fig. 1 zeigt außerdem die A-Säule 8 des Kraftfahrzeugs 1.

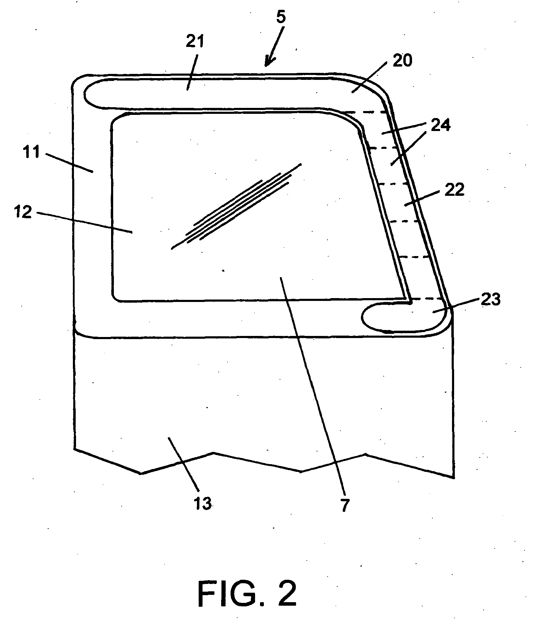

Fig. 2 ist eine schematische Seitenansicht einer Fahrzeugseitenfensteranordnung gemäß der Erfindung vom Innenraum des Kraftfahrzeugs aus gesehen. Ein Seitenfenster 5 des Kraftfahrzeugs 1 hat eine Fensterscheibe 7 in einer Fensteröffnung 12. Die Fensterscheibe 7 kann abgesenkt und angehoben werden, um das Seitenfenster 5 zu öffnen und zu schließen. Ein Randbereich 11 umgibt den Umfangsbereich der Fensteröffnung 12. Der Randbereich 11 kann durch beliebige Strukturelemente gebildet werden, die die Fensteröffnung 12 umgeben. Beispielsweise kann der Randbereich 11 ein Fensterrahmen 6 als Teil einer Fahrzeugtür sein. Im Falle eines rahmenlosen Fensters oder falls der Fensterrahmen 6 im wesentlichen durch Strukturelemente des Fahrzeugaufbaus verdeckt ist, dann kann der Randbereich 11 auch durch mehrere verschiedene Strukturelemente, die die Fensteröffnung umgeben, gebildet werden, so dass der vordere Abschnitt des Randbereichs 11 von der A-Säule 8 des Fahrzeugs 1 gebildet werden kann, der obere Abschnitt des Randbereichs 11 von der Innenseite des Fahrzeugdachs 2 neben der Fensteröffnung 12 gebildet werden kann, der hintere Abschnitt des Randbereichs 11 von der B-Säule 40 des Fahrzeugs gebildet werden kann und der untere Abschnitt des Randbereichs 11 vom oberen Abschnitt einer Türinnenverkleidung 13 gebildet werden kann.

Ein flächenhaftes, berührungsempfindliches Bedienelement 20 ist im Randbereich 11 angeordnet. Das flächenhafte, berührungsempfindliche Bedienelement 20 erkennt eine Position, die der Stelle entspricht, an der ein Bediener das Bedienelement 20 berührt. Das flächenhafte Bedienelement 20 kann als aus einem Gewebe aufgebauten Positionserfassungssensor ausgeführt sein. Ein derartiger Positionserfassungssensor ist beispielsweise in der internationalen Patentanmeldung WO 00/72239 A1 offenbart. Ein flächenhaftes Bedienelement 20 kann auch ein kapazitiver Sensor sein, der einen Kontakt mit der Haut eines Menschen bei Berührung über eine Verringerung der Kapazität des Sensors detektiert. Ein derartiger kapazitiver Sensor ist beispielsweise in der deutschen Patentanmeldung DE 102 06 968 A1 offenbart.

Das Bedienelement 20 ist in drei Funktionsbereiche unterteilt. Der erste Bereich 21 des Bedienelements 20 ist ein oberer Bereich des Bedienelements 20 entlang des oberen Endes des Seitenfensters 5. Wenn der Bediener den ersten Bereich 21 des Bedienelements 20 berührt, dann wird die Fensterscheibe 7 ganz nach oben gefahren und das Fenster wird vollständig geschlossen. Der zweite Bereich 22 des Bedienelements 20 ist zwischen dem oberen Bereich 21 des Bedienelements 20 und einem unteren Bereich 23 des Bedienelements 20 angeordnet. Die Berührungsempfindlichkeit des zweiten Bereichs 22 ist positionsabhängig (ortsabhängig), d.h. der zweite Bereich 22 des Bedienelements 20 ist konzeptionell in funktionelle Unterbereiche 24 eingeteilt, die in Fig. 2 durch gestrichelte Linien angedeutet sind. Wenn der Bediener den zweiten Bereich 22 des Bedienelements 20 berührt, dann wird die Fensterscheibe 7 angehoben oder abgesenkt, so dass die obere Kante 30 der Fensterscheibe 7 im wesentlichen auf der gleichen Höhe ist wie der Punkt, an dem der Bediener den zweiten Bereich 22 des Bedienelements 20 berührt hat. Der dritte Bereich 23 des Bedienelements 20 ist der untere Bereich des Bedienelements 20 und ist unterhalb des zweiten Bereichs 22 des Bedienelements 20 angeordnet. Wenn der Bediener den dritten Bereich 23 des Bedienelements 20 berührt, dann wird die Fensterscheibe 7 ganz nach unten gefahren und das Fenster ist vollständig geöffnet. Der erste, zweite und dritte Bereich 21, 22, 23 des Bedienelements 20 sind als Flächen mit einer gewissen Breite gezeigt. Alternativ kann die Breite der ersten, zweiten und dritten Bereiche 21, 22, 23 des Bedienelements reduziert werden, sodass der erste, zweite und dritte Bereich 21, 22, 23 des Bedienelements im wesentlichen eine Linie bilden, die an der Umrisslinie am Rand der Fensteröffnung 12 entlangläuft. Da das Bedienelement 20 häufig berührt wird, wird das Bedienelement 20 vorzugsweise als ein fleckenbeständiges und wasserabstoßendes Gewebe vorgesehen und/oder es wird eine Farbe, Oberflächenstruktur und Einbauposition des Bedienelements 20 ausgewählt, die es vermeiden, dass das Bedienelement aufgrund der häufigen Benutzung unansehnlich oder verschlissen aussieht.

Die Bedienung des Bedienelements 20 erfolgt folgendermaßen. Falls der Bediener das Fenster ganz öffnen will, dann berührt der Bediener den dritten Bereich 23 des Bedienelements 20. Das berührungsempfindliche Bedienelement 20 erkennt die Interaktion mit der Hand in seinem dritten Bereich 23 und veranlasst eine Steuerung des Fensters derart, dass die Fensterscheibe 7 ganz nach unten gefahren wird und infolgedessen das Fenster vollständig geöffnet wird. In entsprechender Weise, wenn der Bediener das Fenster vollständig schließen will, dann wird der Bediener den ersten Bereich 21 des Bedienelements 20 oberhalb der Fensteröffnung 12 berühren. Das Bedienelement 20 erkennt die Berührung in seinem ersten Bereich 21 und veranlasst, dass die Fensterscheibe 7 zu ihrer obersten Position hochgefahren wird und damit das Fenster vollständig geschlossen wird. Falls der Bediener das Fenster teilweise geöffnet haben will, dann wird der Bediener das Bedienelement 20 in seinem zweiten Bereich 22 berühren. In Abhängigkeit davon, wo der Bediener den zweiten Bereich 22 des Bedienelements 20 berührt, d.h. welchen Unterbereich 24 entlang der Längserstreckung des zweiten Bereichs 22 der Bediener berührt, wird die Fensterscheibe 7 zu einer gewünschten Position angehoben oder abgesenkt. Vorzugsweise wird die obere Kante 30 der Fensterscheibe 7 im wesentlichen auf der gleichen Höhe liegen wie der Punkt wo der Bediener den zweiten Bereich 22 des Bedienelements 20 berührt. Diese Bedienung schafft eine intuitive Steuerung zum Öffnen und Schließen des Fensters, da der Bediener einfach einen Bereich entlang des Randbereichs der Fensteröffnung 12 berührt, wobei der Punkt, den der Bediener berührt einer gewünschten Position der oberen Kante 30 der Fensterscheibe 7 entspricht.

Zusätzlich ermöglicht die Bedienung der Steuerung ein genaues Positionieren der Fensterscheibe 7, ohne dass der.Bediener wiederholt die Fensterscheibe heben oder senken muss bis eine gewünschte Position erreicht wird, wie dies im allgemeinen bei herkömmlichen Kippschaltern der Fall ist.

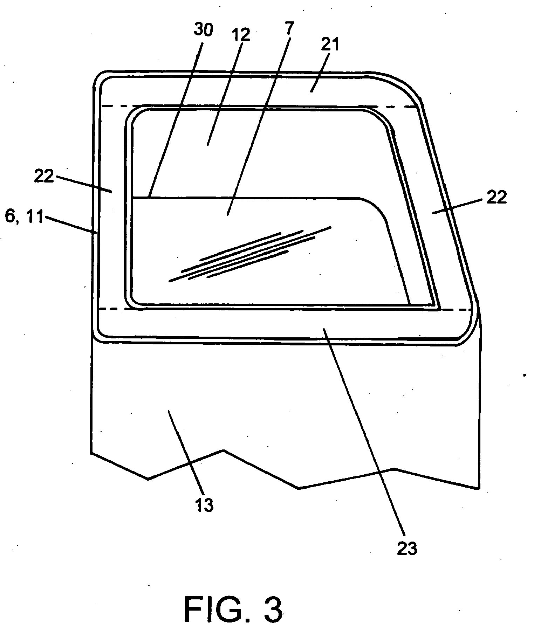

Fig. 3 ist eine schematische Seitenansicht einer weiteren Ausführungsform einer Seitenfensteranordnung gemäß der Erfindung. Das Seitenfenster 5 umfasst eine Fensterscheibe 7 in einer Fensteröffnung 12. Die Fensterscheibe 7 ist in einer teilweise abgesenkten Position gezeigt. Ein Randbereich 11 umgibt den Umfangsbereich der Fensteröffnung 12. Wie oben beschrieben ist, kann der Randbereich 11 durch beliebige Strukturelemente gebildet werden, die die Fensteröffnung 12 umgeben, wie beispielsweise durch einen Fensterrahmen 6 wie dies in Fig. 3 gezeigt ist. Alternativ kann die A-Säule des Fahrzeugs den vorderen Teil des Randbereichs 11 bilden, die Innenseite des Fahrzeugdachs 2 neben der Fensteröffnung 12 kann den oberen Teil des Randbereichs 11 bilden, die B-Säule des Fahrzeugs kann den hinteren Teil des Randbereichs 11 bilden und ein oberer Abschnitt einer Türinnenverkleidung 13 kann den unteren Teil des Randbereichs 11 bilden.

Das berührungsempfindliche Bedienelement 20 ist in dem Randbereich 11 um die Fensteröffnung 12 angeordnet. Das Bedienelement 20 erstreckt sich ganz um die Fensteröffnung 12 und hat in Bezug auf ihre Funktion drei unterschiedliche Bedienbereiche (Steuerbereiche) 21, 22, 23. Genau wie in der in Fig. 2 gezeigten Ausführungsform ist der erste Bereich 21 des Bedienelements 20 ein oberer Bereich des Bedienelements 20 entlang des oberen Endes des Seitenfensters 5. Jedoch anders als in der in Fig. 2 gezeigten Ausführungsform hat das Bedienelement 20 der Fig. 3 zwei zweite Bereiche 22 zwischen dem oberen Bereich 21 des Bedienelements 20 und einem unteren Bereich 23 des Bedienelements 20. Die zweiten Bereiche 22 des Bedienelements 20 sind beispielsweise auf dem Fensterrahmen 6 angeordnet wie dies in Fig. 3 gezeigt ist oder, als Alternative, jeweils auf der A-Säule 8 und der B-Säule 40 angeordnet. Der dritte Bereich 23 des Bedienelements 20 ist unterhalb der zweiten Bereiche 22 des Bedienelements 20 angeordnet. Wenn der Bediener in der in Fig. 3 gezeigten Ausführungsform das Fenster ganz öffnen will, dann berührt der Bediener den dritten Bereich 23 des Bedienelements 20. Wenn der Bediener das Fenster ganz schließen will, dann wird der Bediener den ersten Bereich 21 des Bedienelements 20 über der Fensteröffnung 12 berühren. Wenn der Bediener das Fenster nur teilweise öffnen oder schließen will, dann kann der Bediener eine der beiden zweiten Bereiche 22 des Bedienelements berühren. Abhängig davon auf welchem Niveau, d.h. auf welcher Höhe, der Bediener einen der zweiten Bereiche 22 berührt, wird die Fensterscheibe 7 im wesentlichen auf dieses Niveau angehoben oder abgesenkt. Die obere Kante 30 der Fensterscheibe 7 wird sich im wesentlichen auf dem gleichen Niveau befinden wie der Punkt wo der Bediener einen der zweiten Bereiche 22 des Bedienelements 20 berührt hat. Dadurch, dass das Bedienelement 20 ganz um die Fensteröffnung 12 herum angeordnet ist, kann des Bediener das Fenster durch Berühren eines beliebigen Punktes entlang des Umfangsbereichs der Fensteröffnung 12 bedienen.

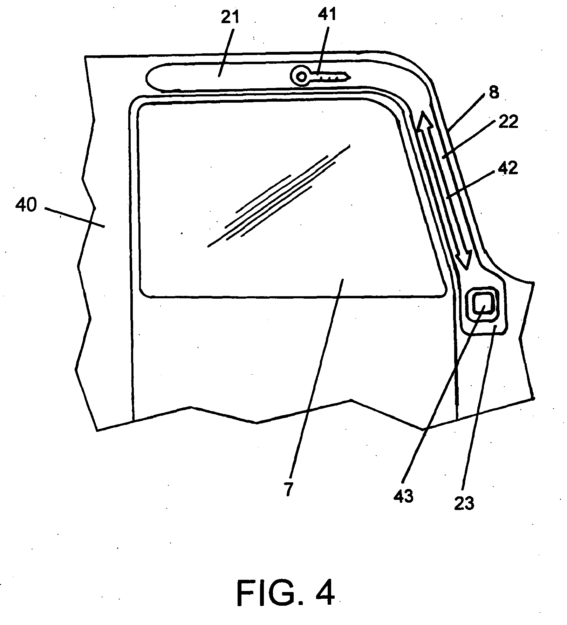

Fig. 4 ist eine schematische Seitenansicht einer weiteren Ausführungsform einer Seitenfensteranordnung gemäß der Erfindung. Der Randbereich 11, der einen Umfangsbereich der Fensteröffnung 12 umgibt, wird von Strukturelementen gebildet, die die Fensteröffnung 12 umgeben. In diesem Fall wird der Randbereich 11 von der A-Säule 8 gebildet, die den vorderen Teil des Randbereichs 11 bildet. Die Innenseite des Fahrzeugdachs 2 neben der Fensteröffnung 12 bildet den oberen Teil des Randbereichs 11. Die B-Säule 40 des Fahrzeugs bildet den hinteren Teil des Randbereichs 11 und der obere Abschnitt einer Türinnenverkleidung 13 bildet den unteren Teil des Randbereichs 11.

Das Bedienelement 20 der Fig. 4 ist wiederum in drei Funktionsbereiche 21, 22, 23 unterteilt. Der erste Bereich 21 des Bedienelements 20 ist entlang des oberen Endes der Seitenfensteröffnung 12 vorgesehen und dient zum Anheben der Fensterscheibe 7 bis ganz nach oben und vollständigen Schließen des Fensters. Der zweite Bereich 22 des Bedienelements 20 ist entlang der A-Säule 8 angeordnet. Der dritte Bereich 23 des Bedienelements 20 ist am unteren Ende der A-Säule angeordnet und dient zum vollständigen Öffnen des Fensters. Die Bedienung des Bedienelements 20 ist genauso wie oben beschrieben. Wenn das Fenster ganz geöffnet werden soll, dann muss der Bediener den dritten Bereich 23 des Bedienelements 20 berühren. Wenn das Fenster ganz geschlossen werden soll, dann muss der Bediener den ersten Bereich 21 des Bedienelements 20 berühren. Wenn das Fenster teilweise geöffnet werden soll, dann muss der Bediener den zweiten Bereich 22 des Bedienelements berühren. Die obere Kante 30 der Fensterscheibe 7 wird im wesentlichen auf dem gleichen Niveau sein wie der Punkt wo der Bediener den zweiten Bereich des Bedienelements 20 berührt. Die in Fig. 4 dargestellte Ausführungsform ist von Vorteil, falls ein Einbau des Bedienelements 20 auf dem Fensterrahmen schwierig ist oder sich die Bedienung als unpraktisch herausstellt oder im Falle eines rahmenlosen Fensters.

Um die intuitive Bedienung zu verbessern, ist es von Vorteil die verschiedenen Steuerbereiche zu kennzeichnen. Die Kennzeichnung erfolgt vorzugsweise mit einfach zu verstehenden Piktogrammen. Der erste Bereich 21 des Bedienelements 20 in Fig. 4, der dazu dient das Fenster ganz zu schließen, ist mit dem Piktogramm eines Schlüssels 41 gekennzeichnet, um anzuzeigen, dass dieser Steuerbereich 21 des Bedienelements 20 das Fenster schließt. Der zweite Bereich 22 des Bedienelements 20 ist mit einem Doppelpfeil 42 gekennzeichnet, der in Richtung nach oben und unten ausgerichtet ist, um anzudeuten, dass der zweite Bereich 22 des Bedienelements 20 dazu verwendet wird das Fenster anzuheben und abzusenken. Der dritte Bereich 23 des Bedienelements 20 ist mit einem Piktogramm 43 gekennzeichnet, das ein vollständig geöffnetes Fenster andeutet. Die Piktogramme sind vorzugsweise entweder in oder direkt neben den jeweiligen Steuerbereichen platziert.

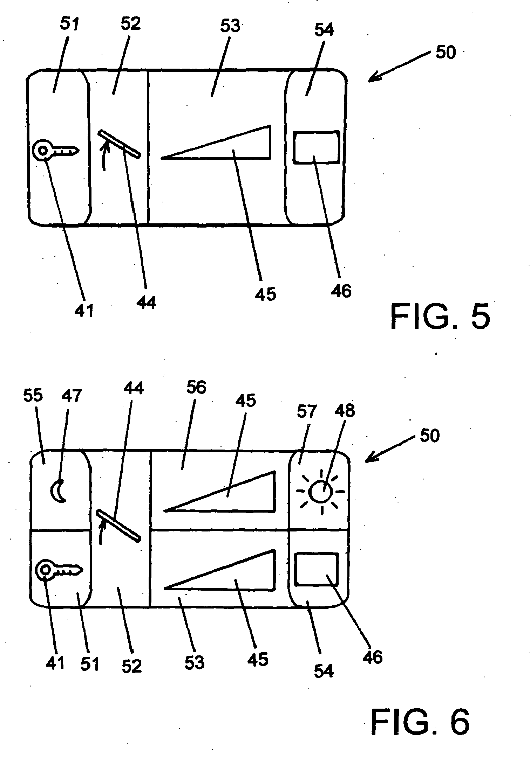

Fig. 5 ist eine schematische Draufsicht eines Bedienelements 50 zum Bedienen eines Dachelements 4 eines Fahrzeugs. Das Bedienelement 50 ist ein im wesentlichen flächenhaftes Element. Um die intuitive Bedienung des Bedienelements 50 zu verbessern, ist das Bedienelement 50 so geformt, dass der Bediener das Bedienelement als eine (graphische) Darstellung des Schiebedachs erkennt. In diesem Fall hat das Bedienelement 50 eine im wesentlichen rechteckige Form, die der Bediener als eine graphische Darstellung eines im wesentlichen rechteckigen Dachelements 4 erkennt. Um die intuitive Bedienung des Bedienelements weiter zu verbessern, wird das Bedienelement 50 vorzugsweise in der Nähe der Dachöffnung eingebaut. Das Bedienelement 50 kann beispielsweise auf der Innenseite des Fahrzeugdachs nahe an der Oberkante der Windschutzscheibe eingebaut sein. Die Farbe und Oberflächenstruktur des Bedienelements 50 ist vorzugsweise an den Dachhimmel des Fahrzeugs angepasst, um das Bedienelement ästhetisch ansprechend zu gestalten.

Das Schiebedach kann so angesteuert werden, dass es in einer vollständig geschlossenen Stellung, in einer gekippten Stellung, in einer teilweise geöffneten Stellung und in einer vollständig geöffneten Stellung ist. Das Bedienelement 50 ist im mehrere Bereiche unterteilt, sodass jeder Bereich einer entsprechenden Stellung des Dachelements 4 entspricht. Ein erster Bereich 51 des Bedienelements 50 wird benutzt, um das Schiebedach vollständig zu schließen. Ein zweiter Bereich 52 wird zum Kippen des Dachelements 4 benutzt. Ein dritter Bereich 53 wird benutzt, um das Dachelement 4 teilweise zu öffnen oder zu schließen, wobei der Bediener den Öffnungsgrad des Schiebedachs durch Berühren einer entsprechenden Fläche bzw. Unterbereichs des dritten Bereichs 53 des Bedienelements steuern kann. Ein vierter Bereich 54 des Bedienelements 50 wird benutzt, um das Schiebedach vollständig zu öffnen.

Das Bedienelement 50 für das Schiebedach arbeitet folgendermaßen. Wenn das Schiebedach ganz geschlossen werden soll, dann muss der Bediener den ersten Bereich 51 des Bedienelements berühren. Das Bedienelement 50 reagiert auf die Einwirkung durch eine Hand; beispielsweise erkennt es eine Änderung eines Drucks, einer Leitfähigkeit oder einer Kapazität und erkennt die Einwirkung durch eine Hand in seinem ersten Bereich 51 und veranlasst eine Steuerung des Schiebedachs derart, dass das Schiebedach ganz geschlossen wird. Wenn der Bediener das Dachelement 4 des Schiebedachs kippen will, dann kann dies durch Berühren des zweiten Bereichs 52 des Bedienelements erfolgen. Wenn das Schiebedach ganz geöffnet werden soll, dann wird der Bediener den vierten Bereich 54 des Bedienelements berühren. Falls der Bediener das Schiebedach teilweise geöffnet haben will, dann wird der Bediener den dritten Bereich 53 des Bedienelements 50 berühren. Abhängig davon an welche Stelle der Bediener den dritten Bereich 53 des Bedienelements 50 berührt, wird das Schiebedach bis zu einem gewünschten Grad geöffnet oder geschlossen. Vorzugsweise entspricht die Position der Vorderkante des Dachelements 4 in der Dachöffnung 3 im wesentlichen dem Punkt, an dem der Bediener den dritten Bereich 53 des Bedienelements 50 entlang seiner Längsachse berührt. Genauer gesagt, wenn der Bediener den dritten Bereich 53 des Bedienelements 50 nahe am vierten Bereich 54 berührt, wird sich das Schiebedach fast vollständig öffnen und umgekehrt, wenn der Bediener den dritten Bereich 53 des Bedienelements an einem Punkt nahe am zweiten Bereich 52 des Bedienelements berührt, wird sich das Schiebedach fast vollständig schließen. Der dritte Bereich 53 des Bedienelements 50 ermöglicht es dem Bediener den Öffnungsgrad mit einer einzigen Berührung genau einzustellen. Das Bedienelement 50 ist vorzugsweise so aufgebaut, dass sich das Schiebedach gleichzeitig mit dem im dritten Bereich 53 des Bedienelements 50 vorwärts und rückwärts gleitenden Finger des Bedieners vorwärts und rückwärts bewegt.

Das Bedienelement 50 ist vorzugsweise so eingebaut, dass die Orientierung der verschiedenen Steuerbereiche 51, 52, 53, 54 des Bedienelements 50 den jeweiligen Positionen des Dachelements 4 entspricht. Mit anderen Worten, das Bedienelement 50 ist vorzugsweise so eingebaut, dass der erste Bereich 51 des Bedienelements auf die Fahrzeugfront hin ausgerichtet ist und der vierte Bereich 54 des Bedienelements 50 auf das Fahrzeugheck hin ausgerichtet ist. Der dritte Steuerbereich 53 des Bedienelements 50 stellt den Öffnungsgrad des Schiebedachs derart ein, dass sich das Dachelement 4 in Richtung auf die Fahrzeugfront hin bewegt, wenn der Bediener Stellen des dritten Bereichs 53 berührt, die weiter vorne liegen und umgekehrt bewegt sich das Dachelement 4 in Richtung Fahrzeugheck, wenn der Bediener den dritten Bereich 53 an Stellen berührt, die weiter hinten liegen. Dies ermöglicht eine intuitive Steuerung zum Öffnen und Schließen des Schiebedachs, da die Bewegungsrichtung und die gewünschte Position des Dachelements 4 der Stelle auf dem Bedienelement 50 entspricht, die der Bediener berührt.

Um die intuitive Bedienung des Schiebedachs weiter zu verbessern, können die jeweiligen Steuerbereiche des Bedienelements mit Piktogrammen gekennzeichnet werden. Der erste Bereich 51 des Bedienelements, der benutzt wird, um das Schiebedach ganz zu schließen, ist mit einem Piktogramm eines Schlüssels 41 gekennzeichnet. Der zweite Bereich 52, der benutzt wird, um das Schiebedach zu kippen, ist mit einem Piktogramm 44 gekennzeichnet, das ein gekipptes Dachelement zeigt. Der dritte Bereich 53, der benutzt wird, um den Öffnungsgrad oder Schließungsgrad des Schiebedachs einzustellen, ist mit einem keilförmigen Piktogramm 45 gekennzeichnet, das die Möglichkeit der Einstellung des Öffnungsgrads des Schiebedachs anzeigt. Der vierte Bereich 54 des Bedienelements 50, der benutzt wird, um das Schiebedach ganz zu öffnen, ist mit einem Piktogramm 46 gekennzeichnet, das ein offenes Schiebedach zeigt.

Fig. 6 ist eine schematische Draufsicht eines Bedienelements 50 für ein Schiebedach eines Fahrzeugs, das zwei Funktionen des Schiebedachs steuert. In diesem Fall hat das Schiebedach ein Dachelement 4, dessen Grad an Lichtdurchlässigkeit bzw. Verdunkelungsgrad eingestellt werden kann, indem die optische Absorption oder der Reflexionsgrad eingestellt wird. Das Bedienelement 50 ist so ausgelegt, dass die Position des Dachelements 4 sowie die optischen Eigenschaften des Dachelements 4 gesteuert werden können.

In Bezug auf die Steuerung der Position des verschiebbaren Dachelements 4 funktioniert das Bedienelement 50 der Fig. 6 genauso wie das Bedienelement der Fig. 5. Das Dachelement 4 kann in einer ganz geschlossenen Stellung, in einer gekippten Stellung, in einer teilweise geöffneten Stellung und ein einer ganz geöffneten Stellung sein. Zusätzlich kann die Lichtdurchlässigkeit des Dachelements 4 gesteuert werden, indem die optischen Eigenschaften wie beispielsweise die Absorptions- oder Reflexionsfähigkeit eingestellt werden.

Das Bedienelement 50 ist derart in Bereiche unterteilt, dass jeder Bereich entweder einer entsprechenden Position des Dachelements 4 oder einem Grad an Lichtdurchlässigkeit des Dachelements 4 entspricht. Der erste Bereich 51 des Bedienelements 50 wird benutzt, um das Schiebedach ganz zu schließen, der zweite Bereich 52 wird benutzt, um das Dachelement 4 zu kippen. Der dritte Bereich 53 wird benutzt, um das Schiebedach teilweise zu öffnen oder zu schließen, wie dies mit Bezug auf das Bedienelement der Fig. 5 beschrieben ist. Der vierte Bereich 54 des Bedienelements 50 wird benutzt, um das Schiebedach vollständig zu öffnen.

Der fünfte Bereich 55 des Bedienelements ermöglicht es das Dachelement so dunkel wie möglich zu machen, indem der Absorptionsgrad oder Reflexionsgrad erhöht wird. Ein sechster Bereich 56 ermöglicht es den Grad der Verdunkelung einzustellen, sodass das Dachelement 4 dunkler wird, wenn der Bediener Stellen des sechsten Bereichs 56 berührt, die näher am fünften Bereich 55 liegen. Umgekehrt wird das Dachelement 4 heller, d.h. lichtdurchlässiger, wenn der Bediener Stellen des sechsten Bereichs 56 berührt, die näher am siebten Bereich 57 sind. Der siebte Bereich 57 des Bedienelements 50 wird benutzt, um das Schiebedach so hell bzw. so lichtdurchlässig wie möglich zu machen.

In Bezug auf das Einstellen der Position des Dachelements funktioniert das Bedienelement 50 der Fig. 6 genauso wie das Bedienelement der Fig. 5. Die verschiedenen Bereiche 51, 52, 53, 54 des Bedienelements 50 werden zu diesem Zweck benutzt. Die Steuerung der optischen Eigenschaften des Schiebedachs ist intuitiv verständlich, da der fünfte Bereich 55 zum vollständigen Abdunkeln des Dachelements 4 an den ersten Bereich 51 des Bedienelements zum vollständigen Schließen des Schiebedachs angrenzt. Der siebte Bereich 57, der benutzt wird, um das Schiebedach so lichtdurchlässig wie möglich zu machen, ist neben dem vierten Bereich 54 des Bedienelements 50 angeordnet, das benutzt wird, um das Schiebedach vollständig zu öffnen. Die Bereiche 53 und 56 zum Einstellen des Öffnungsgrades und Verdunkelungsgrades des Schiebedachs sind ebenfalls nebeneinander liegend angeordnet. Wie oben beschrieben, ist das Bedienelement 50 so eingebaut, dass die Ausrichtung der verschiedenen Steuerbereiche des Bedienelements der Position des Dachelements 4 entspricht, d.h., dass das Bedienelement 50 vorzugsweise so eingebaut ist, dass der erste und fünfte Bereich 51, 55 des Bedienelements zum vorderen Ende des Fahrzeugs hin ausgerichtet sind und der vierte und siebte Bereich 54, 57 des Bedienelements 50 auf das hintere Ende des Fahrzeugs 1 hin ausgerichtet sind.

Die intuitive Bedienung des Schiebedachs wird durch die Kennzeichnung der jeweiligen Bereiche des Bedienelements 50 mit Piktogrammen verbessert. Die Steuerbereiche des Bedienelements 50 zum Öffnen, Schließen und Kippen des Schiebedachs sind mit Piktogrammen 41, 44, 45, 46 gekennzeichnet wie dies mit Bezug auf Fig. 5 beschrieben ist. Die Steuerbereiche 55, 56, 57 des Bedienelements 50 zum Ändern der Dunkelheit oder Lichtdurchlässigkeit des Schiebedachs sind entsprechend ihrer Funktion gekennzeichnet. Der fünfte Bereich 55 des Bedienelements 50, der benutzt wird, um das Schiebedach in den Zustand minimaler Lichtdurchlässigkeit zu schalten, ist mit dem Piktogramm eines Mondes 47 gekennzeichnet. Der sechste Bereich 56 des Bedienelements, der benutzt wird, um den Absorptionsgrad/Reflexionsgrad des Schiebedachs einzustellen, ist mit einem keilförmigen Piktogramm 45 gekennzeichnet, womit auf die Möglichkeit den Verdunkelungsgrad einzustellen hingewiesen wird. Der siebte Bereich 57 des Bedienelements 50, das benutzt wird, um das Schiebedach in den Zustand mit maximaler Lichtdurchlässigkeit zu schalten, ist mit einem Piktogramm einer Sonne 48 gekennzeichnet.

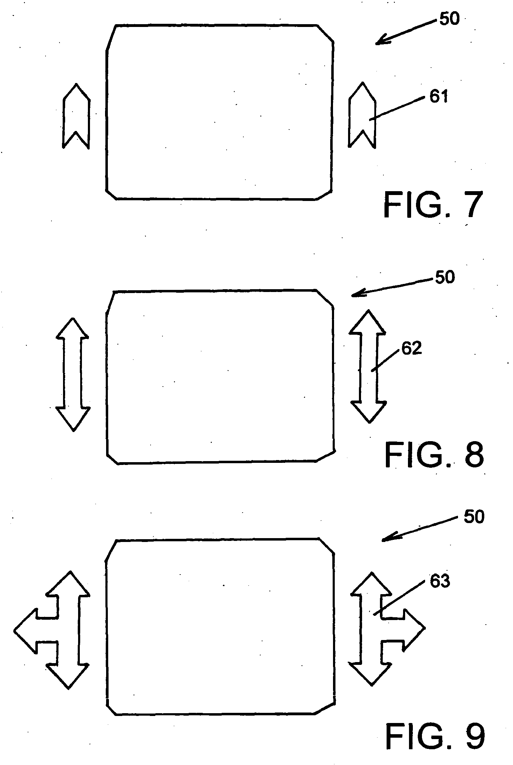

Die Figuren 7 bis 9 sind schematische Draufsichten weiterer Ausführungsformen von Bedienelementen 50 zum Bedienen eines Schiebedachs. Dabei werden die Pfeile 61, 62 dazu verwendet die Betätigung zum Öffnen und Schließen eines Schiebedachs zu kennzeichnen. Die Pfeile 63 werden dazu verwendet die Betätigung zum Öffnen/Schließen des Schiebedachs und zum Auf- und Abbewegen des Dachelements 4 zu kennzeichnen.

### Bezugszeichenliste

- 1: Kraftfahrzeug
- 2: Dach
- 3: Dachöffnung
- 4: Dachelement
- 5: Seitenfenster
- 6: Fensterrahmen
- 7: Fensterscheibe
- 8: A-Säule
- 11: Randbereich
- 12: Fensteröffnung
- 13: Türinnenverkleidung
- 20: Bedienelement für Seitenfenster
- 21, 22, 23: erster, zweiter, dritter Bereich des Bedienelements für ein Seitenfenster
- 24: Unterbereiche des zweiten Bereichs
- 30: Oberkante der Fensterscheibe
- 40: B-Säule
- 41, 42, 43, 44: Piktogramme
- 45, 46, 47, 48: Piktogramme
- 50: Bedienelement für Schiebedach
- 51, 52, 53, 54: erster, zweiter, dritter, vierter Bereich des Bedienelements für ein Schiebedach
- 55, 56, 57: fünfter, sechster, siebter Bereich des Bedienelements für ein Schiebedach
- 61, 62, 63: Anzeigepfeile

## Patentansprüche

1. Fahrzeugeinrichtung mit einer zwischen einer ersten und einer zweiten Position bewegbaren Fahrzeugkomponente (4; 7) und einem Bedienelement (20; 50) zum Bedienen der Fahrzeugkomponente (4; 7), **dadurch gekennzeichnet, dass** das Bedienelement (20; 50) einen im wesentlichen flächenhaften, berührungsempfindlichen ersten Bereich (21; 51), einen im wesentlichen flächenhaften, berührungsempfindlichen zweiten Bereich (22; 53) und einen im wesentlichen flächenhaften, berührungsempfindlichen dritten Bereich (23; 54) aufweist, dass das Bedienelement in Antwort auf eine Berührung des ersten Bereichs (21; 51) ein Steuersignal zum Bewegen der Fahrzeugkomponente in die erste Position erzeugt, dass der zweite Bereich (22; 53) des Bedienelements (20; 50) Unterbereiche (24) aufweist zur variablen Einstellung der Fahrzeugkomponente in Zwischenpositionen zwischen der ersten Position und der zweiten Position, wobei das Bedienelement (20; 50) in Antwort auf eine Berührung eines der Unterbereiche (24) des zweiten Bereichs (22; 53) ein Steuersignal zum Bewegen der Fahrzeugkomponente (4; 7) in eine entsprechende Zwischenposition zwischen der ersten Position und der zweiten Position erzeugt, wobei die Unterbereiche (24) des zweiten Bereichs (22; 53) des Bedienelements (20; 50) relativ zueinander so angeordnet sind, dass benachbarte Unterbereiche des zweiten Bereichs (22; 53) bei Berührung die Fahrzeugkomponente dazu veranlassen sich in entsprechende benachbarte Zwischenpositionen zwischen der ersten Position und der zweiten Position zu bewegen und dass das Bedienelement (20; 50) in Antwort auf eine Berührung des dritten Bereichs (23; 54) ein Steuersignal zum Bewegen der Fahrzeugkomponente in die zweite Position erzeugt.

2. Fahrzeugeinrichtung nach Anspruch 1, **dadurch gekennzeichnet, dass** die Fahrzeugkomponente (7) einen Randbereich (11) hat, wobei der erste, zweite und dritte Bereich (21, 22, 23) des Bedienelements (20) benachbart zur Fahrzeugkomponente (7) angeordnet sind und sich entlang des Randbereichs (11) der Fahrzeugkomponente (7) erstrecken, wenn die Fahrzeugkomponente in der ersten Position ist.

3. Fahrzeugeinrichtung nach Anspruch 2, **dadurch gekennzeichnet, dass** die Fahrzeugkomponente (7) eine Fensterscheibe ist, die zum Öffnen und Schließen einer Fensteröffnung (12) zwischen der ersten Position, entsprechend einer geschlossenen Position, und der zweiten Position, entsprechend einer offenen Position, bewegbar ist, wobei sich der erste Bereich (21) des Bedienelements (20) entlang wenigstens eines Teils einer oberen Kante der Fensteröffnung (12) erstreckt, wobei sich der zweite Bereich (22) des Bedienelements (20) im wesentlichen ganz entlang einer seitlichen Kante der Fensteröffnung (12) erstreckt, und wobei der dritte Bereich (23) benachbart zu einer unteren Kante der Fensteröffnung (12) angeordnet ist.

4. Fahrzeugeinrichtung nach Anspruch 3, **dadurch gekennzeichnet, dass** ein Fensterrahmen (6) die Fensterscheibe (7) hält und die Fensteröffnung (12) definiert und dass wenigstens der erste und der zweite Bereich (21, 22) des Bedienelements (20) auf dem Fensterrahmen (6) angeordnet sind.

5. Fahrzeugeinrichtung nach Anspruch 3, **dadurch gekennzeichnet, dass** der erste, zweite und dritte Bereich (21, 22, 23) ein im wesentlichen flächenhaftes, durchgehendes Band bilden, das ganz um die Festeröffnung (12) herumläuft.

6. Fahrzeugeinrichtung nach Anspruch 3, **dadurch gekennzeichnet, dass** der erste Bereich (21) des Bedienelements (20) oberhalb der Fensteröffnung (12) auf der Innenseite eines Fahrzeugdachbereichs angeordnet ist, der an die Fensteröffnung (12) angrenzt.

7. Fahrzeugeinrichtung nach Anspruch 3, **dadurch gekennzeichnet, dass** der zweite Bereich (22) des Bedienelements (20) auf einer A-Säule eines Fahrzeugs angeordnet ist, die neben der Fensteröffnung (12) angeordnet ist.

8. Fahrzeugeinrichtung nach Anspruch 3, **dadurch gekennzeichnet, dass** der dritte Bereich (23) des Bedienelements (20) im unteren Bereich einer A-Säule eines Fahrzeugs angeordnet ist, die neben der Fensteröffnung (12) angeordnet ist.

9. Fahrzeugeinrichtung nach Anspruch 1, **dadurch gekennzeichnet, dass** jeweils ein Piktogramm (41, 42, 43; 41, 45, 46) in dem ersten, zweiten und dritten Bereich (21, 22, 23; 51, 53, 54) des Bedienelements (20; 50) angeordnet ist, wobei das Piktogramm (41, 42, 43; 41, 45, 46) die jeweilige Bedienfunktion des ersten, zweiten und dritten Bereichs (21, 22, 23; 51, 53, 54) des Bedienelements (20; 50) anzeigt.

10. Fahrzeugeinrichtung nach Anspruch 1, **dadurch gekennzeichnet, dass** die Fahrzeugkomponente (4) ein verschiebbares Dachelement (4) ist, das eine Dachöffnung (3) in einen Fahrzeugdach (2) öffnet und schließt, indem es sich zwischen der ersten Position, die einer geschlossenen Stellung entspricht, und der zweiten Position, die einer offenen Stellung entspricht, hin und her bewegt und dass der zweite Bereich (53) des Bedienelements (50) zwischen dem ersten Bereich (51) und dem dritten Bereich (54) des Bedienelements (50) angeordnet ist.

11. Fahrzeugeinrichtung nach Anspruch 10, **dadurch gekennzeichnet, dass** das Bedienelement (50) einen weiteren Bereich (52) aufweist, der zwischen dem ersten Bereich (51) und dem zweiten Bereich (53) des Bedienelements (50) angeordnet ist, wobei der weitere Bereich (52) in Antwort auf eine Berührung ein Steuersignal erzeugt, um das verschiebbare Dachelement (4) in eine gekippte Stellung zu bringen.

12. Fahrzeugeinrichtung nach Anspruch 10, **dadurch gekennzeichnet, dass** das verschiebbare Dachelement (4) eine einstellbare Lichtdurchlässigkeit aufweist, dass das Bedienelement einen weiteren Bereich (56) aufweist zum variablen Einstellen der Lichtdurchlässigkeit des verschiebbaren Dachelements (4), dass der weitere Bereich (56) Unterbereiche aufweist und das Bedienelement (50) ein Steuersignal erzeugt zum variablen Einstellen der Lichtdurchlässigkeit des verschiebbaren Dachelements (4) in Antwort auf eine Berührung eines jeweiligen Unterbereichs des weiteren Bereichs (56) des Bedienelements (50) und dass die Unterbereiche des weiteren Bereichs (56) des Bedienelements (50) zueinander so angeordnet sind, dass sich die Lichtdurchlässigkeit des verschiebbaren Dachelements (4) um jeweils einen minimalen Wert ändert, wenn jeweils nebeneinanderliegende Unterbereiche nacheinander berührt werden.

13. Fahrzeugeinrichtung nach Anspruch 10, **dadurch gekennzeichnet, dass** das verschiebbare Dachelement (4) eine einstellbare Lichtdurchlässigkeit aufweist, dass das Bedienelement weitere Bereiche (55, 56, 57) aufweist zum Einstellen der Lichtdurchlässigkeit des verschiebbaren Dachelements (4), dass ein erster der weiteren Bereiche (55) des Bedienelements (50) neben dem ersten Bereich (51) des Bedienelements (50) angeordnet ist und das Bedienelement (50) ein Steuersignal erzeugt zum Einstellen der Lichtdurchlässigkeit des verschiebbaren Dachelements (4) auf eine minimale Lichtdurchlässigkeit in Antwort auf eine Berührung des ersten der weiteren Bereiche (55), dass ein zweiter der weiteren Bereiche (56) des Bedienelements (50) neben dem zweiten Bereich (53) des Bedienelements (50) angeordnet ist und das Bedienelement (50) ein Steuersignal erzeugt zum variablen Einstellen der Lichtdurchlässigkeit des verschiebbaren Dachelements (4) auf einen Zwischenzustand für die Lichtdurchlässigkeit in Antwort auf eine Berührung des zweiten der weiteren Bereiche (56), wobei der Zwischenzustand für die Lichtdurchlässigkeit abhängig ist von der Stelle an der der zweite der weiteren Bereiche (56) berührt wird und dass ein dritter der weiteren Bereiche (57) des Bedienelements (50) neben dem dritten Bereich (54) des Bedienelements (50) angeordnet ist und das Bedienelement (50) ein Steuersignal erzeugt zum Einstellen der Lichtdurchlässigkeit des verschiebbaren Dachelements (4) auf eine maximale Lichtdurchlässigkeit in Antwort auf eine Berührung des dritten der weiteren Bereiche (57).

14. Fahrzeugeinrichtung nach Anspruch 1, **dadurch gekennzeichnet, dass** das Bedienelement (20; 50) ein flexibles Gewebe aufweist, das plan auf einer gekrümmten Oberfläche aufliegt und dass die im wesentlichen flächenhaften, berührungsempfindlichen ersten, zweiten und dritten Bereiche (21, 22, 23; 51, 53, 54) des Bedienelements (20; 50) durch das flexible Gewebe gebildet werden.

15. Fahrzeug mit einer Fahrzeugeinrichtung nach einem der Ansprüche 1 bis 14.

## Geänderte Patentansprüche

### Geänderte Patentansprüche gemäss Regel 86(2) EPÜ.

**1.** Fahrzeugeinrichtung mit einer zwischen einer ersten und einer zweiten Position bewegbaren Fahrzeugkomponente (4; 7) und einem Bedienelement (20; 50) zum Bedienen der Fahrzeugkomponente (4; 7),
wobei das Bedienelement (20; 50) einen im wesentlichen flächenhaften, berührungsempfindlichen ersten Bereich (21; 51), einen im wesentlichen flächenhaften, berührungsempfindlichen zweiten Bereich (22; 53) und einen im wesentlichen flächenhaften, berührungsempfindlichen dritten Bereich (23; 54) aufweist,
wobei das Bedienelement in Antwort auf eine Berührung des ersten Bereichs (21; 51) ein Steuersignal zum Bewegen der Fahrzeugkomponente in die erste Position erzeugt,
wobei der zweite Bereich (22; 53) des Bedienelements (20; 50) Unterbereiche (24) aufweist zur variablen Einstellung der Fahrzeugkomponente in Zwischenpositionen zwischen der ersten Position und der zweiten Position, wobei das Bedienelement (20; 50) in Antwort auf eine Berührung eines der Unterbereiche (24) des zweiten Bereichs (22; 53) ein Steuersignal zum Bewegen der Fahrzeugkomponente (4; 7) in eine entsprechende Zwischenposition zwischen der ersten Position und der zweiten Position erzeugt, wobei die Unterbereiche (24) des zweiten Bereichs (22; 53) des Bedienelements (20; 50) relativ zueinander so angeordnet sind, dass benachbarte Unterbereiche des zweiten Bereichs (22; 53) bei Berührung die Fahrzeugkomponente dazu veranlassen, sich in entsprechende benachbarte Zwischenpositionen zwischen der ersten Position und der zweiten Position zu bewegen, und
wobei das Bedienelement (20; 50) in Antwort auf eine Berührung des dritten Bereichs (23; 54) ein Steuersignal zum Bewegen der Fahrzeugkomponente in die zweite Position erzeugt,
**dadurch gekennzeichnet,**
**dass** die Fahrzeugkomponente (4; 7) eine Fensterscheibe (7), die zum Öffnen und Schließen einer Fensteröffnung (12) zwischen der ersten Position, entsprechend einer geschlossenen Position, und der zweiten Position, entsprechend einer offenen Position, bewegbar ist, oder ein verschiebbares Dachelement (4), das eine Dachöffnung (3) in einem Fahrzeugdach (2) öffnet und schließt, indem es sich zwischen der ersten Position, die einer geschlossenen Stellung entspricht, und der zweiten Position, die einer offenen Stellung entspricht, hin und her bewegt, ist.

**2.** Fahrzeugeinrichtung nach Anspruch 1, **dadurch gekennzeichnet, dass** die Fahrzeugkomponente (7) einen Randbereich (11) hat, wobei der erste, zweite und dritte Bereich (21, 22, 23) des Bedienelements (20) benachbart zur Fahrzeugkomponente (7) angeordnet sind und sich entlang des Randbereichs (11) der Fahrzeugkomponente (7) erstrecken, wenn die Fahrzeugkomponente in der ersten Position ist.

**3.** Fahrzeugeinrichtung nach Anspruch 2, **dadurch gekennzeichnet, dass** die Fahrzeugkomponente (7) eine Fensterscheibe ist,
wobei sich der erste Bereich (21) des Bedienelements (20) entlang wenigstens eines Teils einer oberen Kante der Fensteröffnung (12) erstreckt, wobei sich der zweite Bereich (22) des Bedienelements (20) im wesentlichen ganz entlang einer seitlichen Kante der Fensteröffnung (12) erstreckt, und wobei der dritte Bereich (23) benachbart zu einer unteren Kante der Fensteröffnung (12) angeordnet ist.

**4.** Fahrzeugeinrichtung nach Anspruch 3, **dadurch gekennzeichnet, dass** ein Fensterrahmen (6) die Fensterscheibe (7) hält und die Fensteröffnung (12) definiert und dass wenigstens der erste und der zweite Bereich (21, 22) des Bedienelements (20) auf dem Fensterrahmen (6) angeordnet sind.

**5.** Fahrzeugeinrichtung nach Anspruch 3, **dadurch gekennzeichnet, dass** der erste, zweite und dritte Bereich (21, 22, 23) ein im wesentlichen flächenhaftes, durchgehendes Band bilden, das ganz um die Festeröffnung (12) herumläuft.

**6.** Fahrzeugeinrichtung nach Anspruch 3, **dadurch gekennzeichnet, dass** der erste Bereich (21) des Bedienelements (20) oberhalb der Fensteröffnung (12) auf der Innenseite eines Fahrzeugdachbereichs angeordnet ist, der an die Fensteröffnung (12) angrenzt.

**7.** Fahrzeugeinrichtung nach Anspruch 3, **dadurch gekennzeichnet, dass** der zweite Bereich (22) des Bedienelements (20) auf einer A-Säule eines Fahrzeugs angeordnet ist, die neben der Fensteröffnung (12) angeordnet ist.

**8.** Fahrzeugeinrichtung nach Anspruch 3, **dadurch gekennzeichnet, dass** der dritte Bereich (23) des Bedienelements (20) im unteren Bereich einer A-Säule eines Fahrzeugs angeordnet ist, die neben der Fensteröffnung (12) angeordnet ist.

**9.** Fahrzeugeinrichtung nach Anspruch 1, **dadurch gekennzeichnet, dass** jeweils ein Piktogramm (41, 42, 43; 41, 45, 46) in dem ersten, zweiten und dritten Bereich (21, 22, 23; 51, 53, 54) des Bedienelements (20; 50) angeordnet ist, wobei das Piktogramm (41, 42, 43; 41, 45, 46) die jeweilige Bedienfunktion des ersten, zweiten und dritten Bereichs (21, 22, 23; 51, 53, 54) des Bedienelements (20; 50) anzeigt.

**10.** Fahrzeugeinrichtung nach Anspruch 1, **dadurch gekennzeichnet, dass** die Fahrzeugkomponente (4) ein verschiebbares Dachelement (4) ist, und dass der zweite Bereich (53) des Bedienelements (50) zwischen dem ersten Bereich (51) und dem dritten Bereich (54) des Bedienelements (50) angeordnet ist.

**11.** Fahrzeugeinrichtung nach Anspruch 10, **dadurch gekennzeichnet, dass** das Bedienelement (50) einen weiteren Bereich (52) aufweist, der zwischen dem ersten Bereich (51) und dem zweiten Bereich (53) des Bedienelements (50) angeordnet ist, wobei der weitere Bereich (52) in Antwort auf eine Berührung ein Steuersignal erzeugt, um das verschiebbare Dachelement (4) in eine gekippte Stellung zu bringen.

**12.** Fahrzeugeinrichtung nach Anspruch 10, **dadurch gekennzeichnet, dass** das verschiebbare Dachelement (4) eine einstellbare Lichtdurchlässigkeit aufweist, dass das Bedienelement einen weiteren Bereich (56) aufweist zum variablen Einstellen der Lichtdurchlässigkeit des verschiebbaren Dachelements (4), dass der weitere Bereich (56) Unterbereiche aufweist und das Bedienelement (50) ein Steuersignal erzeugt zum variablen Einstellen der Lichtdurchlässigkeit des verschiebbaren Dachelements (4) in Antwort auf eine Berührung eines jeweiligen Unterbereichs des weiteren Bereichs (56) des Bedienelements (50) und dass die Unterbereiche des weiteren Bereichs (56) des Bedienelements (50) zueinander so angeordnet sind, dass sich die Lichtdurchlässigkeit des verschiebbaren Dachelements (4) um jeweils einen minimalen Wert ändert, wenn jeweils nebeneinanderliegende Unterbereiche nacheinander berührt werden.

**13.** Fahrzeugeinrichtung nach Anspruch 10, **dadurch gekennzeichnet, dass** das verschiebbare Dachelement (4) eine einstellbare Lichtdurchlässigkeit aufweist, dass das Bedienelement weitere Bereiche (55, 56, 57) aufweist zum Einstellen der Lichtdurchlässigkeit des verschiebbaren Dachelements (4), dass ein erster der weiteren Bereiche (55) des Bedienelements (50) neben dem ersten Bereich (51) des Bedienelements (50) angeordnet ist und das Bedienelement (50) ein Steuersignal erzeugt zum Einstellen der Lichtdurchlässigkeit des verschiebbaren Dachelements (4) auf eine minimale Lichtdurchlässigkeit in Antwort auf eine Berührung des ersten der weiteren Bereiche (55), dass ein zweiter der weiteren Bereiche (56) des Bedienelements (50) neben dem zweiten Bereich (53) des Bedienelements (50) angeordnet ist und das Bedienelement (50) ein Steuersignal erzeugt zum variablen Einstellen der Lichtdurchlässigkeit des verschiebbaren Dachelements (4) auf einen Zwischenzustand für die Lichtdurchlässigkeit in Antwort auf eine Berührung des zweiten der weiteren Bereiche (56), wobei der Zwischenzustand für die Lichtdurchlässigkeit abhängig ist von der Stelle an der der zweite der weiteren Bereiche (56) berührt wird und dass ein dritter der weiteren Bereiche (57) des Bedienelements (50) neben dem dritten Bereich (54) des Bedienelements (50) angeordnet ist und das Bedienelement (50) ein Steuersignal erzeugt zum Einstellen der Lichtdurchlässigkeit des verschiebbaren Dachelements (4) auf eine maximale Lichtdurchlässigkeit in Antwort auf eine Berührung des dritten der weiteren Bereiche (57).

**14.** Fahrzeugeinrichtung nach Anspruch 1, **dadurch gekennzeichnet, dass** das Bedienelement (20; 50) ein flexibles Gewebe aufweist, das plan auf einer gekrümmten Oberfläche aufliegt und dass die im wesentlichen flächenhaften, berührungsempfindlichen ersten, zweiten und dritten Bereiche (21, 22, 23; 51, 53, 54) des Bedienelements (20; 50) durch das flexible Gewebe gebildet werden.

**15.** Fahrzeug mit einer Fahrzeugeinrichtung nach einem der Ansprüche 1 bis 14.
